# EUROPEAN PATENT APPLICATION

(11) **EP 1 901 563 A2**
(43) Date of publication of application: **19.03.2008**
(21) Application number: 07116360.4
(22) Date of filing: 13.09.2007
(51) Int. Cl.: H04N 9/75

(54) **Image display device**

(30) Priority: 13.09.2006 JP 2006247508
(71) Applicant: FUJITSU TEN LIMITED, Kobe-shi, Hyogo (JP)
(72) Inventor: Iwamoto, Shinichi, Kobe-shi, Hyogo (JP)
(74) Representative: Skone James, Robert Edmund

(57) **Abstract**

A chroma key color determining section is operable to determine a chroma key color in an image of a plurality of input images. A image synthesizing section is operable to overlap the images with each other by switching the images with respect to each pixel based on an output of the chroma key color determining section. The plurality of images are switched by switching all of pixels of the image input to the chroma key color determining section into the chroma key color images.

## Description

The disclosure of Japanese Patent Application No. 2006-247508 filed on September 13, 2006 including specification, drawings and claims is incorporated herein by reference in its entirety.

### BACKGROUND

The present invention relates to an image display device for displaying a plurality of images such as images from a car navigation device and images from a television receiving device by switching them.

In vehicles, a liquid display device designed to decrease a size of the whole display device and make it thin is used as a display device of a car navigation. When the liquid display device is not used as the car navigation, it is possible to switch the image and watch a television image or a DVD image by switching the image.

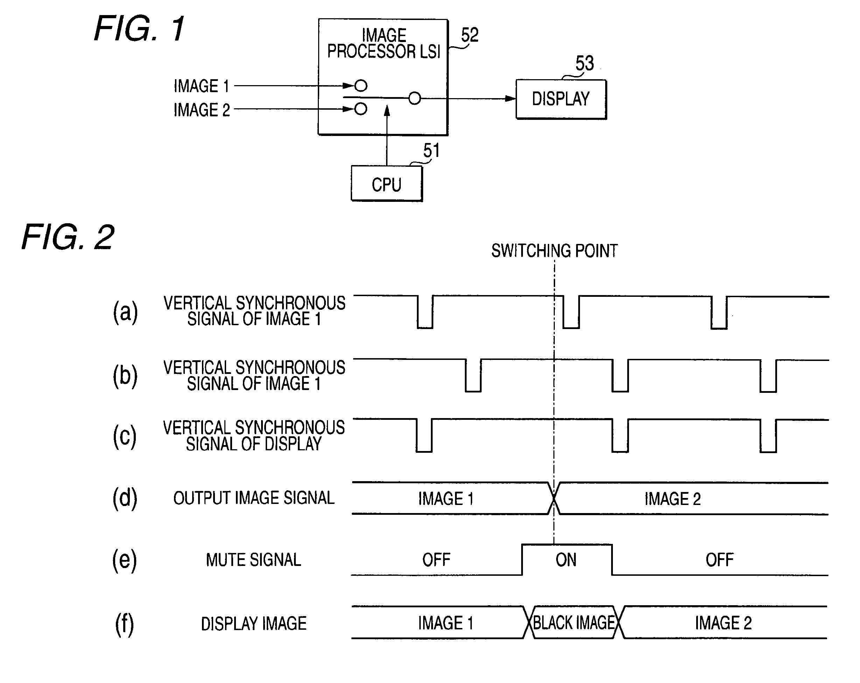

Fig. 1 is a diagram illustrating the conventional image display device for switching a plurality of images as described above. When an image 1 and an image 2 are switched, an image displayed by an image processor LSI 52 is selected to switch the image and the switched image is inputted to a display 53, on the basis of the instruction from a CPU 51.

When an image switching circuit switches the image in this way, noise images caused by image converting processes are displayed on a display screen. Accordingly, the whole display screen exhibits a black background by overlapping black mute signals with the image signals outputted from the image switching circuit for switching the image signals.

As shown by (a) and (b) in Fig. 2, a vertical synchronous signal of the image 1 and a vertical synchronous signal of the image 2 are shifted with each other. When simply switching the image 1 to the image 2, since the display 53 displays the image in accordance with the vertical synchronous signal of the image 1 as shown by (c) in Fig. 2 at a switching point, the image is distorted until the synchronous signal of the image 2 is inputted in the display 53. Accordingly, the image which is out of synchronization is displayed in the display screen.

For this reason, when switching the image 1 to the image 2, a mute signal is turned on as shown by (e) in Fig. 2 at the switching point, and a backlight of the display 53 is turned off, thereby displaying a black image on the display screen. Then, an image processor LSI 52 switches the image 1 to the image 2 as shown by (d) in Fig. 2. When the vertical synchronous signal of the image 2 is inputted, the mute signal is turned off as shown by (e) in Fig. 2, and the backlight of the display 53 is turned on, thereby displaying the image 2 on the display 53.

Meanwhile, a chroma key method has been known as an image synthesizing method for synthesizing images separately photographed to look like image photographed by one camera device. In the chroma key method, a subject (person, etc.) as a main image is photographed against a blue or green screen, and then color data (chroma key data) is extracted from the main image data. By synthesizing background image data which is photographed in advance with the chroma key data, it is possible to easily synthesize the images (for example, see Patent Document 1).

Patent Document 1: Japanese Patent Publication No. 10-150585A

Conventionally, the image is switched by using the image processor LSI. In this case, since the input images are not synchronized with each other, it is necessary to synchronize TFTs of the display whenever the image is switched. Accordingly, an image mute process is performed during the image is distorted so that the distorted image is not shown to users,

In this way, when the black image for the image mute is inserted for a predetermined time whenever switching the image, it is difficult to instantly provide the switched image for the users. In addition, since it is necessary to perform the mute control whenever switching the image, the throughput of a CPU is increased.

### SUMMARY

It is therefore an object of the invention to provide an image display device capable of instantly switching a plurality of images without performing the image mute process.

In order to achieve the above object, according to an aspect of the invention, there is provided an image display device that synthesizes multiple images by using the above-mentioned chroma key method and that switches the multiple images or overlaps different images with each other on the same display screen by inserting a chroma key color image in one of the multiple images.

With the image display device according to the aspect of the invention, since the images are switched with each other by using the chroma key method, a synchronization distortion does not occur. Accordingly, it is possible to switch the image instantly without performing the image mute process. Then, a load of the CPU can be reduced.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a schematic diagram showing a conventional image switching device;
Fig. 2 is a timing chart of the conventional image switching device shown in Fig. 1 when the images are switched;
Fig. 3 is a block diagram showing a configuration of an in-vehicle display apparatus using an image display device according to an embodiment of the invention;
Fig. 4 is a block diagram showing a function of an overlap processing unit in an image processor LSI according to the embodiment;
Fig 5 is a schematic diagram illustrating a data storing state of a RAM I1 according to the embodiment;
Fig. 6 is a block diagram showing a configuration of a navigation device 3 according to the embodiment;
Fig. 7 is a timing chart of the in-vehicle display apparatus shown in Fig. 3 when the images are switched;
Fig. 8 is a schematic diagram showing an example of a synthesized image when a user selects a navigation image according to the embodiment;
Fig. 9 is a schematic diagram showing an example of a synthesized image when the user selects a TV image according to the embodiment;
Fig. 10 is a timing chart of the in vehicle display apparatus shown in Fig. 3 when a synthesized image is displayed;
Fig. 11 is a schematic diagram showing an example of a synthesized image when the TV image is displayed on a part of the navigation image according to the embodiment;
Fig. 12 is a schematic diagram for explaining another example of an image synthesizing display according to the embodiment;
Fig. 13 is a block diagram showing a configuration of an in-vehicle display apparatus using an image display device according to another embodiment of the invention;
Fig. 14 is a block diagram showing a function of an overlap processing unit of the in-vehicle display apparatus shown in Fig. 13;
Fig. 15 is a block diagram showing a configuration of a navigation device of the in-vehicle display apparatus shown in Fig. 13;
Fig. 16 is a timing chart of the in-vehicle display apparatus shown in Fig. 13 when switching to a TV image;
Fig. 17 is a timing chart of the in-vehicle display apparatus shown in Fig. 13 when switching to a navigation image;
Fig. 18 is a timing chart of the in-vehicle display apparatus shown in Fig. 13 when a synthesized image is displayed; and
Fig. 19 is a schematic diagram showing an example of a synthesized image when the TV image and a DVD image are displayed on a part of a navigation image according to the another embodiment.

### DETAILED DESCRIPTION OF THE EMBODIMENTS

### [First Embodiment]

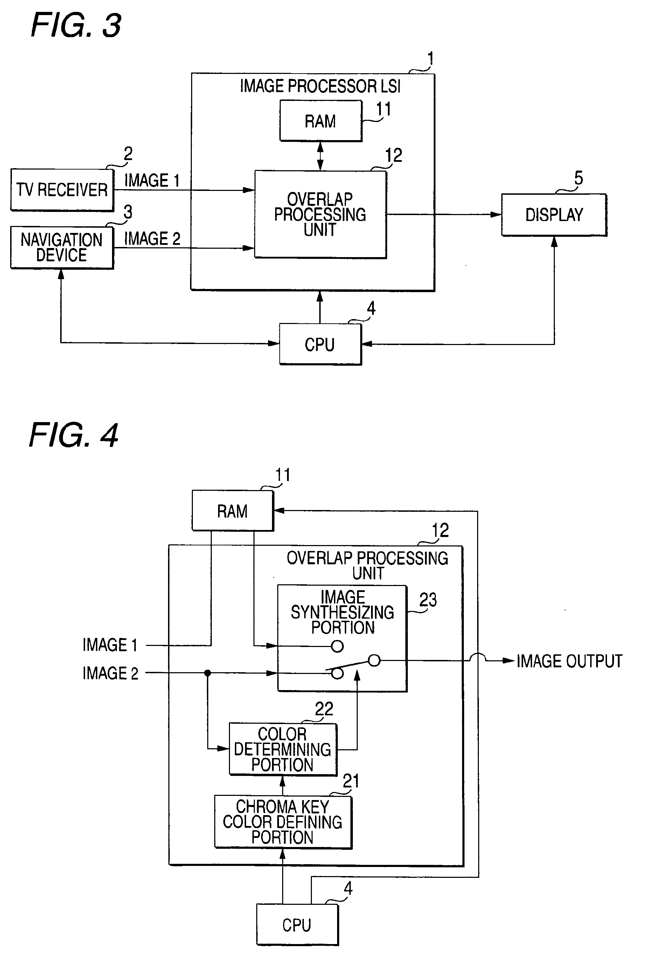

Hereinafter, embodiments of the invention will be described in detail with reference to the accompanying drawings. As shown in Fig. 3, an in-vehicle display apparatus includes an image processor LSI 1, a TV receiver 2, a navigation device 3, a CPU 4, and a display 5.

The image processor LSI 1 controlled by the CPU 4 includes a RAM 11 and an overlap processing unit 12. A TV image from the TV receiver 2 and a navigation image from the navigation device 3 are inputted to the image processor LSI 1 as images 1 and 2. One of the images 1 and 2 (the image 1 in this embodiment) is first stored in the RAM 11 so as to carry out a synchronization matching operation, and then the image 1 or image 2 that is read out from the RAM 11 is inputted to the overlap processing unit 12.

An image in which colors used in the DVD image, the TV image, etc. cannot be controlled is used as the image 1. Then, images in which a chroma key color can be used, that is, images of which colors can be controlled are used as the image 2.

The display 5 not only displays an image from the image processor LSI 1, but also displays an operation image inputted from the navigation device 3 via the CPU 4. That is, the display 5 displays the operation images of various functions. A touch panel switch is disposed on an LCD display constituting a display unit of the display 5. Accordingly, a selection or function of a corresponding item can be carried out by pressing an item displayed on the LCD display.

In addition, the CPU 4 carries out a setting operation of a chroma key color used in the overlap processing unit 12 and a setting operation of the image processor LSI 1. Also, the CPU 4 controls a reading out position of a pixel signal of the image 1 stored in the RAM 11, thereby synchronizing the image 1 with the image 2. Namely, the CPU 4 synchronize the display 5 with an image signal of the image 2 and the CPU 4 controls the reading out position of the pixel signal of the image 1 stored in the RAM 11 in response to an image display position and a shift between a vertical synchronous signal of the image 2 and a vertical synchronous signal of the image 1, thereby elimination a synchronous shift of the images 1 and 2.

As shown in Fig. 4, the overlap processing unit 12 includes a chroma key color defining portion 21, a color determining portion 22, and an image synthesizing portion 23.

The chroma key color defining portion 21 sets RGB levels of the chroma key colors used in the color determining portion 22 under the control of the CPU 4. The color determining portion 22 detects pixels that have the same RGB level as a chroma key processing level included in the image 2, and then inputs the detected signal to the image synthesizing portion 23 as a chroma key signal.

As described above, the chroma key signal is inputted from the color determining portion 22 when the pixels in the image 2 has the same RGB level as the chroma key processing level. The image synthesizing portion 23 outputs a pixel signal of the image 2 when the chroma key signal is not inputted, and the image synthesizing portion 23 outputs a pixel signal of the image 1 read out from the RAM 11 when the chroma key signal is inputted. As a result, the image synthesizing portion 23 synthesizes the images 1 and 2 into pixel levels, and then outputs the synthesized image to the display 5.

Such functions can be carried out by a hardware, but also can be carried out by a software using a CPU, a ROM, a RAM, etc.

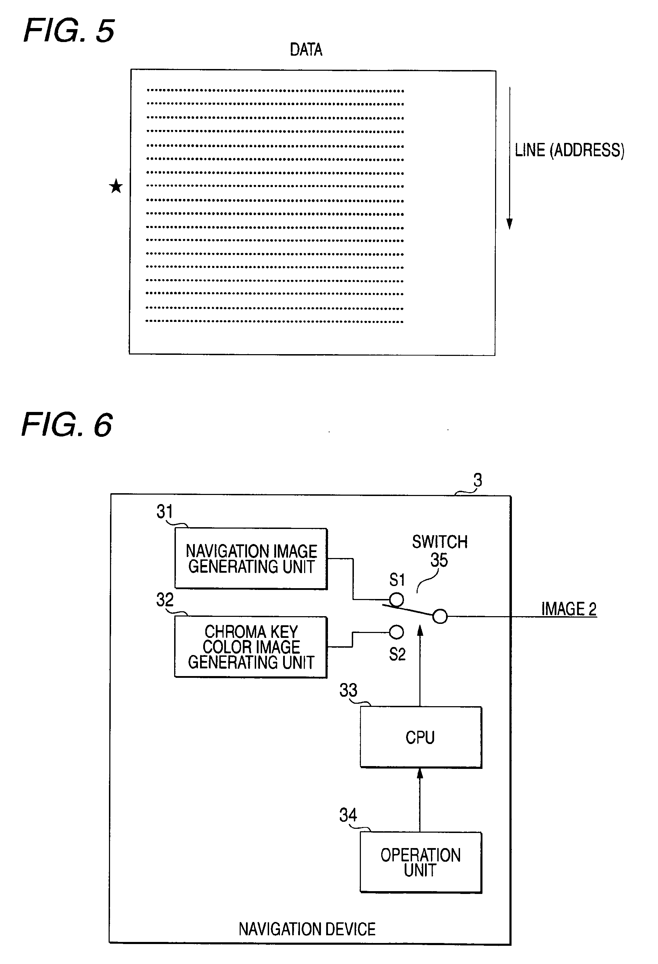

On the other hand, the CPU 4 carries out a control for storing the pixel signal of the image 1 into the RAM 11, thereby storing data of the pixel signal of the image 1 with respect to each lines of the data as shown in Fig. 5. When the image 1 is read out, the CPU 4 controls the reading out position (a position as indicated a star sign in Fig. 5) of the pixel signal of the image 1 stored in the RAM 11 in response to the image display position and the shift between the vertical synchronous signal of the image 2 and the vertical synchronous signal of the image 1, thereby outputting the image signal of the image 1.

As shown in Fig. 6, the navigation device 3 includes a navigation image generating unit 31, a chroma key color image generating unit 32, a CPU 33, an operation unit 34, and a switch 35. The navigation device 3 includes a present location detecting unit constituted by a GPS sensor or a gyro sensor, a map data storing unit that stores map data including road map data, and the like, but the other configuration which is not related to the invention is not shown.

The navigation image generating unit 31 generates a navigation image including the map data and vehicle location information, and then inputs it to the switch 35. The chroma key color image generating unit 32 generates a chroma key color used in the image processor LSI 1, for example, a pink image signal, and then inputs it to the switch 35. The switch 35 selectively output images from the navigation image generating unit 31 or the chroma key color image generating unit 32 by switching between terminals S1 and S2 according to the control of the CPU 33.

Meanwhile, the operation unit 34 is constituted by multiple operation keys including a navigation operation key and an image selection key, but a part or all of the multiple operation keys can be substituted by the touch panel of the display 5.

Next, an operation of the in-vehicle display apparatus will be described. When a power is applied to the in-vehicle display apparatus, the CPU 4 commands the chroma key color defining portion 21 to define a pink as the chroma key color, and thereby the chroma key color defining portion 21 sets the same RGB level as a pink as the chroma key color in the color determining portion 22.

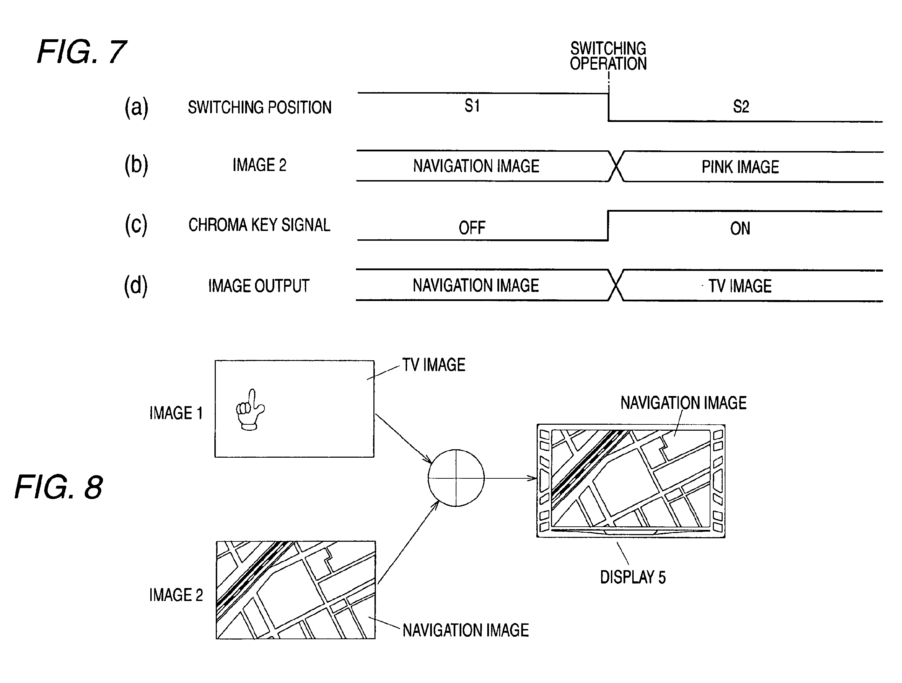

Then, when the user selects the navigation image, the CPU 33 of the navigation device 3 switches the switch 35 to the terminal S1 as shown by (a) in Fig. 7, the navigation image is outputted as the image 2 from the navigation device 3 as shown by (b) in Fig. 7, the TV image is inputted as the image 1 to the image processor LSI 1 from the receiver 2 as shown in Fig. 8, and the navigation image is inputted as the image 2 to the image processor LSI 1 from the navigation device 3.

Under such a state, since the chroma key color, that is, a pink is not included in the navigation image, the color determining portion 22 of the overlap processing unit 12 does not generate the chroma key signal as shown by (c) in Fig. 7. Thus, the image synthesizing portion 23 normally outputs the image 2, that is, the navigation image as the image output as shown by (d) in Fig. 7, whereby the navigation image is displayed on the display 5 as shown in Fig. 8.

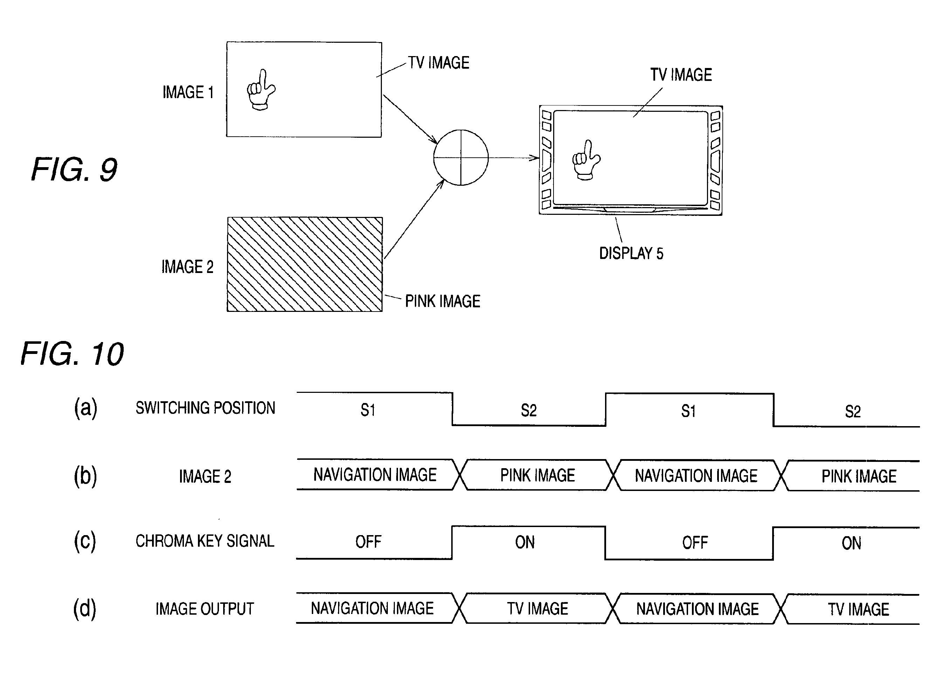

When the user commands an image switch by using the operation unit 34 of the navigation device 3, the CPU 33 switches the switch 35 to the side of the chroma key color image generating portion 32, that is, to the terminal S2 as shown by (a) in Fig. 7, and a pink image is outputted as the image 2 from the navigation device 3 as shown by (b) in Fig. 7. Thus, as shown in Fig. 9, the TV image is inputted as the image 1 to the image processor LSI 1 from the TV receiver 2 and the pink image is inputted as the image 2 to the image processor LSI 1 from the navigation device 3.

Accordingly, the color determining portion 22 of the overlap processing unit 12 normally generates the chroma key signal as shown by (c) in Fig. 7, and then inputs it to the image synthesizing portion 23. The image synthesizing portion 23 normally outputs the image 1 read out from the RAM 11, that is, the TV image as the image output as shown by (b) in Fig. 7. Thus, as shown in Fig. 9, the TV image is displayed on the display 5.

As described above, by switching one of a plurality of images to the chroma key color image, it is possible to switch the images. Also, since a synchronization signal to TFTs of the display 5 is generated based on the vertical synchronous signal of the image 2 and the reading out position of the pixel signal of the image 1 stored in the RAM 11 is controlled in response to the image display position and the shift between the vertical synchronous signal of the image 2 and the vertical synchronous signal of the image 1, it is possible to switch between the image 2 and the image 1 instantly without an image distortion. In addition, since it is not necessary to perform the image mute process, the load of the CPU can be reduced.

### [Second Embodiment]

In the above-described embodiment, the switched image is displayed on the whole display screen of the display 5 by setting all pixels of the image 2 to the chroma key color (pink), but the image 1 can be displayed on a part of the image 2. Hereinafter, a case in which the image 1 is displayed on a part of the image 2 will be described. In addition, the configuration is the same as that in Figs. 3 to 6, and the description of the same configuration will be omitted.

Similarly to the first embodiment, when the user selects the navigation image, the CPU 33 of the navigation device 3 switches the switch 35 to a terminal S1 in Fig. 6, and the navigation image is outputted as the image 2 from the navigation device 3. Thus, as shown in Fig. 8, the TV image is inputted as the image 1 to the image processor LSI 1 from the TV receiver 2, and the navigation image is inputted as the image 2 to the image processor LSI 1 from the navigation device 3.

Under such a state, as described above, since the chroma key color, that is, a pink is not included in the navigation image. Accordingly, the color determining portion 22 of the overlap processing unit 12 does not generate the chroma key signal. Thus, the image synthesizing portion 23 normally selects pixels of the image 2. As shown in Fig. 8, the navigation image is displayed on the display 5.

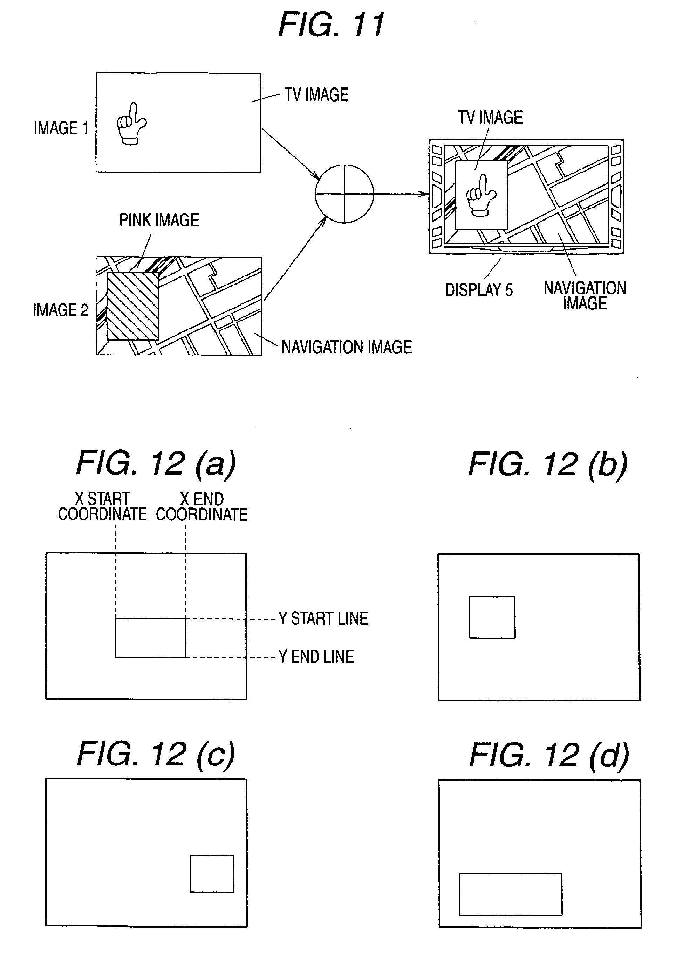

Meanwhile, when the user commands an image switch by using the operation unit 34, the CPU 33 switches the switch 35 to the side of the chroma key color image generating portion 23, that is, to a terminal S2 as shown by (a) in Fig. 10 within a predetermined range of the navigation image. Thus, the navigation image and the pink image are switched with each other and are outputted as the image 2 from the navigation device 3 as shown by (b) in Fig. 10, the TV image is inputted as the image 1 to the image processor LSI 1 from the TV receiver 2 and an image in which the pink image is inserted in a part of the navigation image is inputted as the image 2 to the image processor LSI 1 from the navigation device 3 as shown in Fig. 11.

Accordingly, in a pink image part of the navigation image, the color determining portion 22 of the overlap processing unit 12 generates the chroma key signal and then inputs it to the image synthesizing portion 23 as shown by (c) in Fig. 10. When the chroma key signal is inputted to the image synthesizing portion 23, the image synthesizing portion 23 selectively outputs pixels of the image 1 read out from the RAM 11. Accordingly, the image synthesizing portion 23 switches the navigation image and the TV image with each other and output them as the image output as shown by (d) in Fig. 10, and as shown in Fig. 11, the TV image is displayed in a part of the navigation image on the display 5.

Also in this case, as described above, by generating the synchronization signal to TFTs of the display 5 based on the vertical synchronous signal of the image 2 and controlling the reading out position of the pixel signal of the image 1 stored in the RAM 11 in response to the image display position and the shift between the vertical synchronous signal of the image 2 and the vertical synchronous signal of the image 1, it is possible to display the TV image in a part of the navigation image without the image distortion.

In a case that one of the two images is stored in the RAM 11 and the synchronization is performed by controlling the reading out position, the two images can be overlapped without using the chroma key process. As shown by (a) to (d) in Fig. 12, the two images may be overlapped by setting an X start coordinate, an X end coordinate, a Y start line, and a Y end line by a register as a rectangular area other than the overlapping image, that is, a transparent area of the overlapping image, and by switching the images in response to the settings. However, in a case that the four overlapping screens are set as shown by (a) to (d) in Fig. 10, it is necessary to perform a register process when displaying each overlapping screen. On the other hand, according to the chroma key process in the present invention, since it is not necessary to designate the area and perform the register process, it is possible to reduce the register process in the image processor LSI.

### [Third Embodiment]

In the above-described embodiment, the case where two images are inputted to the image processor LSI is described. However, even when three images are inputted to the image processor LSI, the image display device according to the invention can be used. Hereinafter, the case where the three images are inputted to the image processor LSI will be described

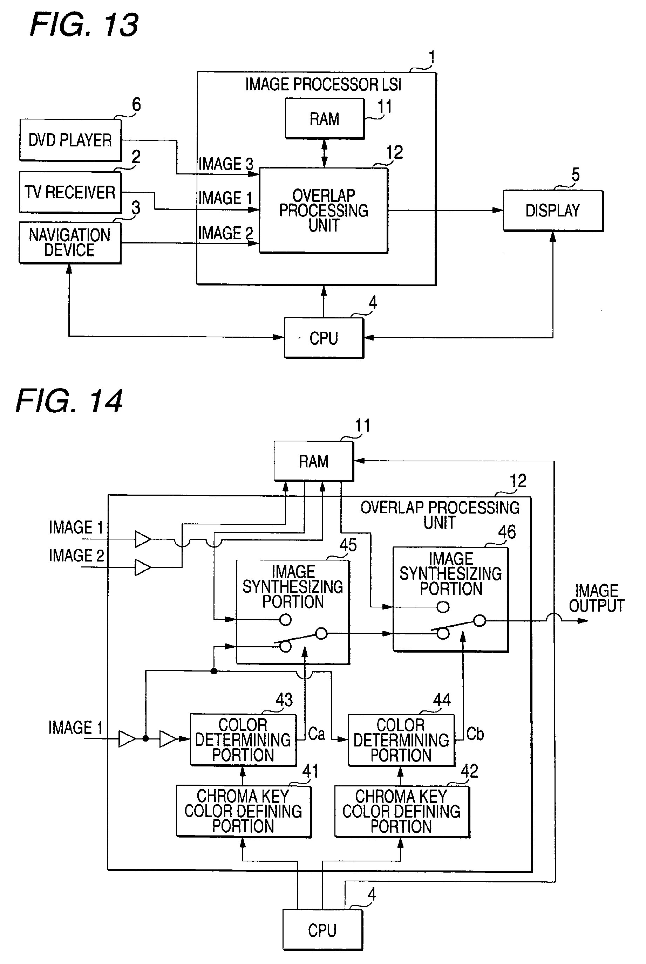

The configuration of the in-vehicle display apparatus shown in Fig. 13 is the same as that of the in -vehicle display apparatus in Fig. 3 except that an image from a DVD player 6 is inputted as an image 3 in addition to the configuration in Fig. 3, and the overlap unit 12 and the navigation device 3 are configured in a different manner from that in Fig. 3, and thus the description of the same configuration will be omitted.

As shown in Fig. 14, the overlap processing unit 12 includes chroma key color defining portions 41 and 42, color determining portions 43 and 44, and image synthesizing portions 45 and 46.

The chroma key color defining portions 41 and 42 set RGB levels of the chroma key colors used in the color determining portions 43 and 44 under the control of the CPU 4. The color determining portions 43 and 44 detects pixels that have the same RGB level as the chroma key processing level included in the image 2, and then inputs the detected signal to the image synthesizing portions 45 and 46 as the chroma key signals Ca, Cb.

Meanwhile, the image synthesizing portion 45 outputs a pixel signal of the image 2 when the chroma key signal Ca is not inputted from the color determining portion 43, and the image synthesizing portion 45 outputs a pixel signal of the image 1 read out from the RAM 11 when the chroma key signal Ca is inputted. As a result, the image synthesizing portion 45 outputs a synthesized image to the image synthesizing portion 46. Additionally, the image synthesizing portion 46 outputs a pixel signal of the image from the image synthesizing portion 45 when the chroma key signal Cb is not inputted from the color determining portion 44, and the image synthesizing portion 46 outputs a pixel signal of the image 3 read out from the RAM 11 when the chroma key signal Cb is inputted. As a result, the image synthesizing portion 46 inputs the synthesized image to the display 5 as an image output.

The CPU 4 performs a control for writing the pixel signals of the image 1 and the image 3 into the RAM 11 and a control for reading out the pixel signals of the image 1 and the image 3 from the RAM 11. When reading out the pixel signal of the image 1, the CPU 4 controls the reading out position of the pixel signal of the image 1 stored in the RAM 11 in response to the image display position and the shift between the vertical synchronous signal of the image 2 and the vertical synchronous signal of the image 1, and then outputs the pixel signal of the image 1. When reading out the pixel signal of the image 3, the CPU 4 controls the reading out position of the pixel signal of the image 3 stored in the RAM 11 in response to the image display position and the shift between the vertical synchronous signal of the image 2 and the vertical synchronous signal of the image 3, and then outputs the pixel signal of the image 3.

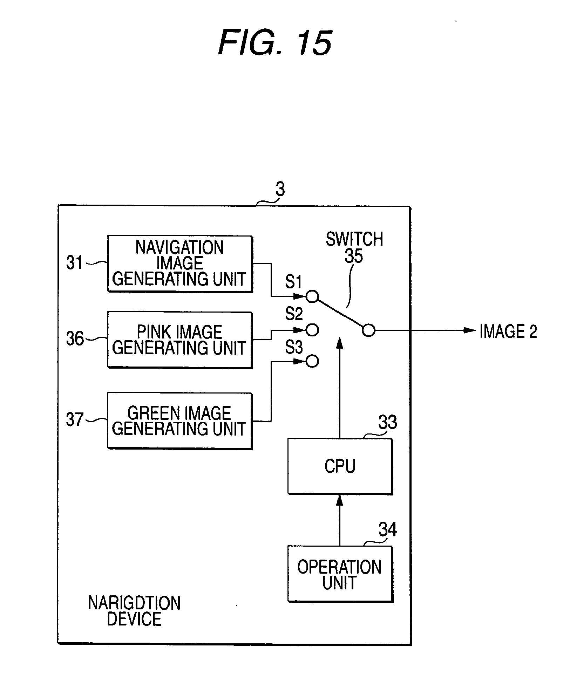

As shown in Fig. 15, the configuration of the navigation device 3 shown in Fig. 13 is the same as that of the navigation device 3 shown in Fig. 6 except that a pink image generating unit 36 and a green image generating unit 37 are provided as the chroma key color generating unit, and thus the description of the same configuration will be omitted.

Next, an operation of the in-vehicle display apparatus according to the third embodiment will be described. When a power is applied to the in-vehicle display apparatus, the CPU 4 commands the chroma key color defining portion 41 to define a pink as the chroma key color and the chroma key color defining portion 42 to define a green as the chroma key color. Accordingly, the chroma key color defining portion 41 sets a pink RGB level as the chroma key color in the color determining portion 43 and the chroma key color defining portion 42 sets a green RGB level as the chroma key color in the chroma key color determining portion 44.

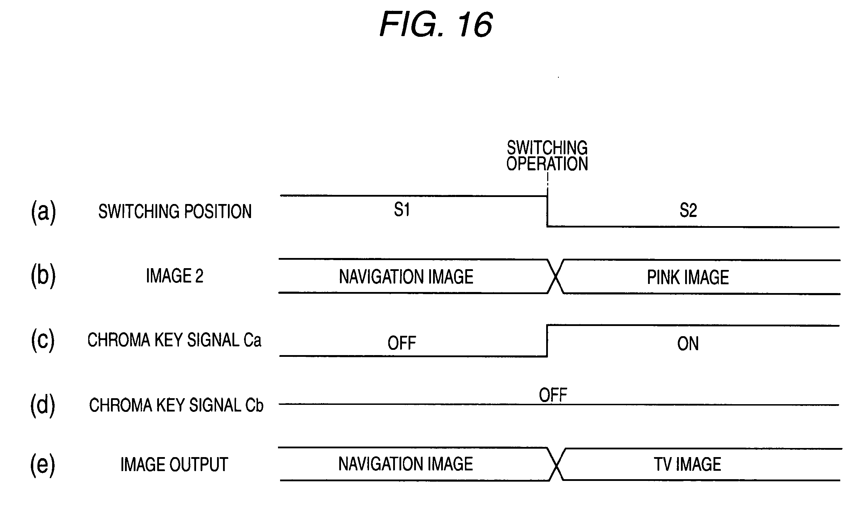

When the user selects the navigation image, as shown by (a) in Fig. 16, the CPU 33 of the navigation device 3 switches the switch 35 to be in a state shown in Fig. 15, that is, to a terminal S1, and the navigation image is outputted as the image 2 as shown by (b) in Fig. 16. Thus, the TV image is inputted as the image 1 to the image processor LSI 1 from the TV receiver 2, the navigation image is inputted as the image 2 to the image processor LSI 1 from the navigation device 3, and the DVD image is inputted as the image 3 to the image processor LSI 1 from the DVD player 6.

Under such a state, since the chroma key color is not included in the navigation image, the color determining portions 43 and 44 of the overlap processing unit 12 does not generate the chroma key signals Ca, Cb as shown by (c) and (d) in Fig. 16. Since the image synthesizing portion 45 normally selects pixels of the image 2 and the image synthesizing portion 46 normally selects pixels of an output image of the image synthesizing portion 45, the navigation image is outputted as the image output as shown by (e) in Fig. 16, and the navigation image is displayed on the display 5.

When the user commands a TV image switch by using the operation unit 34 of the navigation device 3, the CPU 33 switches the switch 35 to the side of the pink image generating portion 36, that is, to a terminal S2 as shown by (a) in Fig. 16, and then all pixels output a pink image as the image 2 as shown by (b) in Fig. 16. Thus, the color determining portion 43 of the overlap processing unit 12 generates the chroma key signal Ca and input that to the image synthesizing portion 45 as shown by (c) in Fig. 16. The image synthesizing portion 45 selectively outputs pixels of the image 1, that is, the TV image to the image synthesizing portion 46.

On the other hand, since the color determining portion 44 does not generate the chroma key signal Cb as shown by (d) in Fig. 16 and the image synthesizing portion 46 selectively input pixels of the image from the image synthesizing portion 45, that is, the TV image as the image output as shown by (e) in Fig. 16, the TV image from the TV receiver 2 is displayed on the display 5.

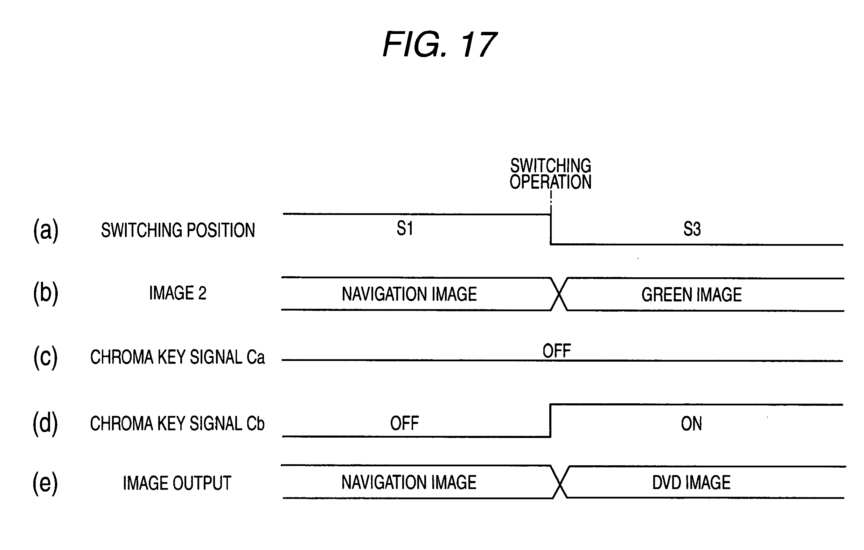

When the user commands a DVD image switch by using the operation unit 34 of the navigation device 3, the CPU 33 switches the switch 35 to the side of the green image generating portion 37, that is, to a terminal S3 as shown by (a) in Fig. 17, and then all pixels output a green image as the image 2 as shown by (b) in Fig. 17. Thus, the color determining portion 43 of the overlap processing unit 12 does not generate the chroma key signal Ca as shown by (c) in Fig. 17. The image synthesizing portion 45 selectively outputs pixels of the image 2, that is, the green image, to the image synthesizing portion 46.

Meanwhile, since the color determining portion 44 generates the chroma key signal Cb and input it to the image synthesizing portion 46 as shown by (d) in Fig. 17, the image synthesizing portion 46 selectively outputs pixels of the image 3, that is, the DVD image as the image output as shown by (e) in Fig. 17, and the DVD image from the DVD player 6 is displayed on the display 5.

Accordingly, when there are three or more input images, it is possible to instantly switch the image by setting multiple chroma key colors.

### [Fourth Embodiment]

In the above-described embodiment, the switched image is displayed on the whole display screen by setting all pixels of the image 2 to the chroma key color (pink or green), but either of the image 1 or 3 can be displayed on a part of the image 2, or both of the images 1 and 3 can be displayed on a part of the image 2. Hereinafter, a case in which both of the images 1 and 3 are simultaneously displayed on a part of the image 2 will be described. In addition, the configuration is the same as that in Figs. 13 to 15, and the description of the same configuration will be omitted.

Similarly to the third embodiment, when a power is applied to the in-vehicle display apparatus, the CPU 4 commands the chroma key color defining portion 41 to define a pink as the chroma key color and commands the chroma key color defining portion 42 to define a green as the chroma key color. Accordingly, the chroma key color defining portion 41 sets a pink RGB level as the chroma key color in the color determining portion 43 and the chroma key color defining portion 42 sets a green RGB level as the chroma key color in the chroma key color determining portion 44.

When the user selects the navigation image, the CPU 33 of the navigation 3 switches the switch 35 to the terminal S1 shown in Fig. 15. Thus, the TV image is inputted to the image processor LSI 1 from the TV receiver 2 as the image 1, the navigation image is inputted to the image processor LSI 1 from the navigation device 3 as the image 2, and the DVD image is inputted to the image processor LSI 1 from the DVD player 6 as the image 3.

Under such a state, since the chroma key color is not included in the navigation image, the color determining portions 43 and 44 does not generate the chroma key signals Ca, Cb. Since the image synthesizing portion 45 normally selects pixels of the image 2 and the image synthesizing portion 46 normally selects pixels of an output image of the image synthesizing portion 45, the images 1 and 3 are not displayed on the display screen in an overlapped manner, and the navigation image is displayed on the display 5.

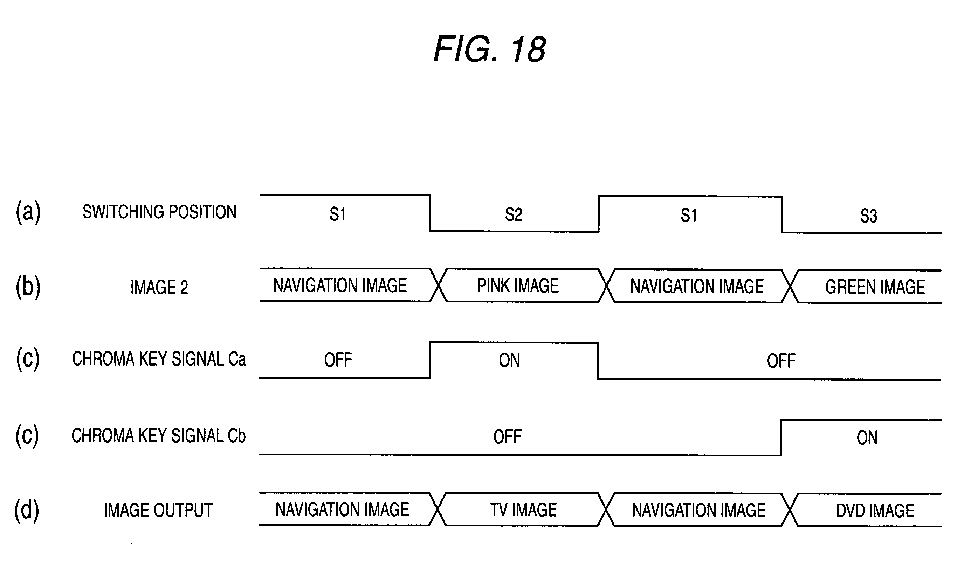

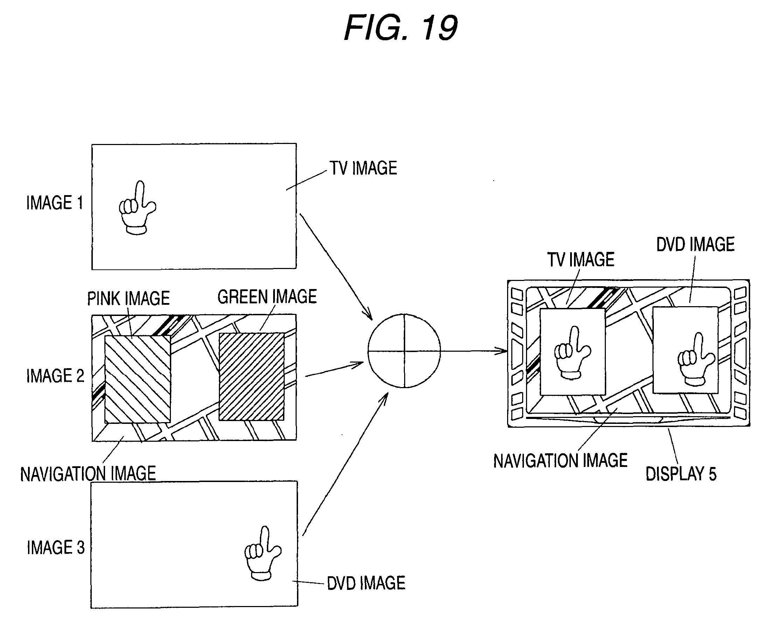

Meanwhile, when the user commands a simultaneous display of the TV image and the DVD image by using the operation unit 34 of the navigation device 3, the CPU 33 of the navigation device 3 switches the switch 35 to the side of the pink image generating portion 36, that is, the terminal S2 or the green image generating portion 37, that is, the terminal S3 within two predetermined ranges of the navigation image as shown by (a) in Fig. 18. Thus, the navigation image, a pink image and a green image are switched with each other, and outputted as the image 2 from the navigation device 3. Accordingly, as shown in Fig. 19, an image in which the pink image or the green image is inserted in a part of the navigation image is inputted as the image 2 to the image processor LSI 1 from the navigation device 3 while the TV image is inputted to the image processor LSI 1 from the TV receiver 2 as the image 1 and the DVD image is inputted to the image processor LSI 1 from the DVD player 6 as the image 3.

As described above, in a pink image part of the navigation image, the color determining portion 43 generates the chroma key signal Ca and then inputs it to the image synthesizing portion 45 as shown by (c) in Fig. 18. The image synthesizing portion 45 selects pixels of the image 1, that is, the TV image and then outputs it to the image synthesizing portion 46. At this time, since the color determining portion 44 does not generate the chroma key signal Cb as shown by (d) in Fig. 18, the image synthesizing portion 46 selects pixels of the image from the image synthesizing portion 45, that is, the TV image and then inputs it to the display 5 as the image output as shown by (e) in Fig. 18.

In a green image part of the navigation image, the color determining portion 43 does not generate the chroma key signal Ca as shown by (c) in Fig. 18. The image synthesizing portion 45 selects pixels of the image 2 and then outputs it to the image synthesizing portion 46. At this time, the color determining portion 44 generates the chroma key signal Cb and then inputs it to the image synthesizing portion 46 as shown by (d) in Fig. 18. Thus, the image synthesizing portion 46 selects pixels of the image 3, that is, the DVD image as shown by (e) in Fig. 18 and then inputs it to the display 5 as the image output.

Accordingly, as shown in Fig. 19, the TV image and the DVD image are displayed on a part of the navigation image on the display 5.

In the above-described embodiment, the operation in which the images 1 and 3 are simultaneously displayed on a part of the image 2 is described. However, an operation in which either of the images 1 and 3 is simultaneously displayed on a part of the image 2 is the substantially same as the operation described in the second embodiment, and thus the description will be omitted.

Additionally, in the above-described embodiment, it has described as follows: the image display device according to the invention is applied to the in-vehicle display apparatus, and the DVD image, the TV image, and the navigation image are exemplified as the images. However, the display device according to the invention can be applied to various image display devices other than the in-vebicle display apparatus. Moreover, various images can be used as the image.

## Claims

1. An image display device comprising:
a chroma key color determining section operable to determine a chroma key color in an image of a plurality of input images; and
a image synthesizing section operable to overlap the images with each other by switching the images with respect to each pixel based on an output of the chroma key color determining section;
wherein the plurality of images are switched by switching all of pixels of the image input to the chroma key color determining section into the chroma key color images.

2. The image display device as set forth in claim 1, wherein a plurality of the chroma key colors are set when three or more images are input.

3. An image display device comprising:
a chroma key color determining section operable to determine a chroma key color in an image of a plurality of input images; and
an image synthesizing section operable to overlap the images with each other by switching the images with respect to each pixel based on an output of the chroma key color determing section,
wherein the images are overlapped by switching a part of pixels in the image inputted to the chroma key color determing section into the chroma key color images.

4. The image display device as set forth in claim 3, wherein a plurality of the chroma key colors are set when three or more images are input.

5. An image display device comprising:
a color image generating section operable to generate a chroma key color image signal;
a switching section operable to switch between one of a plurality of input image signals and the chroma key color image signal generated by the color image generating section;
a storing section operable to store the input image signals other than the one of the input image signals;
a chroma key color determining section operable to determine a chroma key color in an image signal from the switching section; and
an image synthesizing section operable to overlap images with each other by switching the image signal from the switching section into the one of the input image signals stored in the storing section with respect to each pixel based on an output of the chroma key color determining section,
wherein the switching section switches all of pixels in an image into the chroma key color image, thereby switching a plurality of images.

6. The image display device as set forth in claim 5, further comprising a control section operable to control reading and writing of the storing section,
wherein the control section controls a reading out position of an image stored in the storing section in response to an image display position and a shift between an synchronous signal of the image input to the switching section and an synchronous signal of the image stored in the storing section, thereby eliminating the synchronous shift of the images.

7. An image display device comprising:
a color image generating section operable to generate a chroma key color image signal;
a switching section operable to switch between one of a plurality of input image signals and the chroma key color image signal generated by the color image generating section;
a storing section operable to store the input image signals other than the one of the input image signals;
a chroma key color determining section operable to determine a chroma key color in an image signal from the switching section; and
an image synthesizing section operable to overlap images with each other by switching the image signal from the switching section into the one of the input image signals stored in the storing section with respect to each pixel based on an output of the chroma key color determining section,
wherein the switching section switches a part of pixels in an image into the chroma key color image, thereby switching a plurality of images.

8. The image display device as set forth in claim 7, farther comprising a control section operable to control reading and writing of the storing section,
wherein the control section controls a reading out position of an image stored in the storing section in response to an image display position and a shift between an synchronous signal of the image input to the switching section and an synchronous signal of the image stored in the storing section, thereby eliminating the synchronous shift, of the images.
